# FASCICULE DE BREVET EUROPEEN

(11) **EP 3 125 174 B1**
(45) Date de publication et mention de la délivrance du brevet: **28.07.2021**
(21) Numéro de dépôt: 16182013.9
(22) Date de dépôt: 29.07.2016
(51) Int. Cl.: G06Q 10/06, G06Q 50/06, G01C 11/02

(54) **PROCÉDÉ DE GESTION, PRODUIT PROGRAMME D'ORDINATEUR, SUPPORT D'INFORMATIONS, ET SYSTÈME DE GESTION ASSOCIÉ**
VERWALTUNGSVERFAHREN, COMPUTERPROGRAMMPRODUKT, DATENTRÄGER UND ENTSPRECHENDES VERWALTUNGSSYSTEM
METHOD FOR MANAGING, COMPUTER PROGRAM PRODUCT, DATA SUPPORT AND ASSOCIATED MANAGING SYSTEM

(30) Priorité: 30.07.2015 FR 1557296
(43) Date de publication de la demande: 01.02.2017
(73) Titulaire: Flowbird, 75015 Paris (FR)
(72) Inventeur: LONGET, Christian, 25220 Amagney (FR); THIEBAUT, Michel, 25290 Ornans (FR)
(74) Mandataire: Lavoix

(56) Documents cités:
- US-A1- 2010 332 373
- US-A1- 2011 137 591
- US-A1- 2014 032 178
- US-A1- 2014 166 746
- US-A1- 2014 214 219

## Description

La présente invention concerne un procédé de gestion. La présente invention s'applique notamment à un produit programme d'ordinateur, un support d'informations et à un système de gestion.

De manière générale, l'invention se situe dans le domaine des installations comportant au moins un élément photovoltaïque. Pour de telles installations, notamment pour le dimensionnement du ou des éléments photovoltaïques, il convient de disposer d'outils capables de fournir une estimation de la production d'énergie solaire par de tel(s) élément(s) photovoltaïque(s).

Il est connu que certains outils destinés au dimensionnement d'éléments photovoltaïques utilisent la capture d'images pour estimer l'ensoleillement accessible à l'installation. De tels outils sont notamment utilisés dans les parcs photovoltaïques ou les structures intégrées au bâti.

Toutefois, aucun des outils précités ne fournit une estimation de la production d'énergie solaire du système global ou une estimation de son autonomie.

D'autres outils prennent en compte les données relatives à la consommation en énergie de l'installation.

Toutefois, de telles données sont une donnée d'entrée fixe. En outre, dans de tels outils, il convient d'obtenir l'ensoleillement accessible par une autre application. Ceci peut être pénalisant dans un usage en temps réel.

Il est également connu des outils professionnels, comme le logiciel ARCHELIOS (marque déposée), fournissant une analyse complète pour des installations d'habitation ou des centrales de production.

Toutefois, la mise en œuvre de l'analyse implique la prise en compte de nombreux paramètres complexifiant l'emploi de tels outils.

Il existe donc un besoin pour un procédé de gestion permettant d'ajuster la consommation en énergie d'une installation pour améliorer le service rendu.

Pour cela, il est proposé un procédé de gestion d'une installation selon la revendication 1.

Grâce à ces dispositions, le procédé de gestion assure une gestion du fonctionnement de l'installation, c'est-à-dire une gestion de l'activation de certains organes ou non en fonction du bilan énergétique. Un tel ajustement permet à la fois d'assurer que les organes de l'installation soient toujours alimentés et que le service produit par l'installation à l'utilisateur réponde aux besoins effectifs de l'utilisateur.

Suivant des modes de réalisation particuliers, le procédé de gestion est selon l'une des revendications 2 à 7.

L'invention concerne aussi un programme d'ordinateur selon la revendication 8.

En outre, il est également proposé un support de données selon la revendication 9.

Par ailleurs, il est également proposé dans la présente demande un système de gestion selon la revendication 10.

D'autres caractéristiques et avantages de l'invention apparaîtront à la lecture de la description en référence aux dessins qui sont :
- figure 1, une vue schématique d'un exemple d'installation, et
- figure 2, une vue schématique d'un exemple de système de gestion.

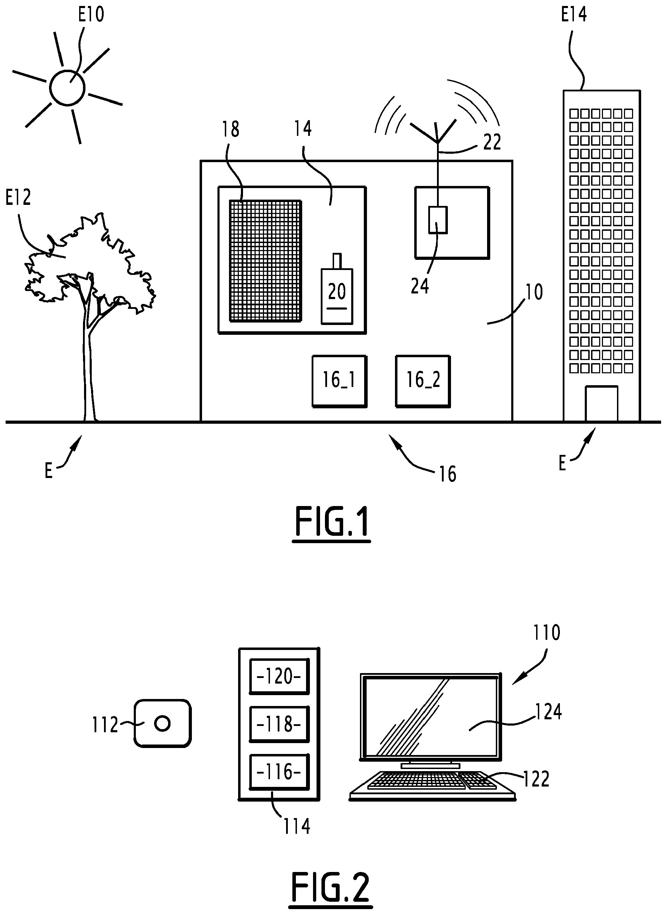

Une installation 10 et un système de gestion 12 sont représentés schématiquement à la figure 1.

L'installation 10 dépend des applications envisagées. De manière générale, l'installation fournit à un utilisateur un ou plusieurs services.

Dans un exemple non revendiqué, l'installation 10 est une maison.

De préférence, dans le cas illustré, l'installation 10 est un automate.

Par le terme « automate », il est entendu un dispositif électromécanique multiservices à destination de l'usager de l'espace urbain. Par exemple, un automate est un équipement de gestion du stationnement et de billettique de transport en communs de personnes. Le terme « automate » vise notamment un automate dans le domaine du parking et des transports de personnes.

Un horodateur est un exemple particulier d'automate. Comme visible à la figure 1, l'installation 10 comporte le système de gestion 12.

Le système de gestion 12 est, selon l'exemple de la figure 1, un contrôleur.

Le système de gestion 12 est un système permettant de gérer le fonctionnement de l'installation 10. Pour cela, le système de gestion 12 est notamment propre à mettre en œuvre un procédé de gestion de l'installation 10.

L'installation 10 comporte un dispositif d'alimentation 14 et une pluralité d'organes 16.

Le dispositif d'alimentation 14 comporte un système photovoltaïque et une unité de stockage 20.

Le système photovoltaïque comprend, selon l'exemple de la figure 1, un seul panneau solaire 18.

En variante, le système photovoltaïque comporte une pluralité de panneaux solaires 18.

Dans le cas de la figure 1, le panneau solaire 18 est positionné de manière à capter le flux solaire émis par l'environnement E.

Dans le cas où l'installation 10 est un automate, l'environnement E est usuellement un environnement urbain avec, par exemple, des arbres et des bâtiments qui peuvent gêner l'accès du panneau solaire 18 à l'éclairement énergétique, et notamment au flux solaire. De ce fait, à titre d'illustration, sur la figure 1, l'environnement E comporte le soleil E10, l'arbre E12 et un gratte-ciel E14.

L'unité de stockage 20 est propre à stocker l'énergie produite par le panneau solaire 18.

Par exemple, l'unité de stockage 20 est un ensemble de batteries. Une seule batterie est représentée sur la figure 1.

Le dispositif d'alimentation 14 est, selon l'exemple de la figure 1, un dispositif d'alimentation dit photovoltaïque du fait que le dispositif d'alimentation 14 comporte un panneau solaire 18.

Selon un exemple non revendiqué, le dispositif d'alimentation 14 est mixte.

Il est entendu par l'expression « mixte » que le dispositif d'alimentation 14 comporte une partie d'alimentation de type photovoltaïque et une partie d'apport d'énergie additionnelle. La partie d'apport d'énergie additionnelle est propre à apporter de l'énergie non issue du panneau solaire 18.

Selon un exemple non revendiqué, la partie d'apport d'énergie additionnelle est à l'intérieur de l'installation 10.

A titre d'exemple non revendiqué, la partie d'apport d'énergie additionnelle est une pile non-rechargeable.

Selon un autre exemple non revendiqué, la partie d'apport d'énergie additionnelle est une partie de réception d'énergie produite extérieurement au dispositif d'alimentation 14.

A titre d'exemple non revendiqué, la partie de réception d'énergie produite extérieurement au dispositif d'alimentation 14 est relié au réseau électrique extérieur. La partie de réception d'énergie produite extérieurement au dispositif d'alimentation 14 permet de compléter l'alimentation produite par le panneau solaire 18.

Un tel dispositif d'alimentation 14 mixte est notamment favorisé lorsque l'ensoleillement que reçoit le panneau solaire 18 est insuffisant pour subvenir aux besoins en énergie de l'installation 10.

Dans l'exemple représenté, seuls deux organes 16 sont représentés, étant donné que le nombre d'organes est a priori quelconque.

Comme visible sur la figure 1, le signe de référence du premier organe est 16_1 et le signe de référence du deuxième organe est 16_2.

De manière générale, il est entendu par le terme «organe 16 », un organe contribuant à la fourniture d'un ou de plusieurs services pour un utilisateur de l'installation 10.

Il est entendu que l'expression « contribuer à fournir » est à interpréter largement, notamment comme comprenant les cas de services « dématérialisés » qui mettent simplement à disposition le ou les services considérés.

Par conséquent, un tel organe consomme de l'énergie pour fonctionner. Autrement formulé, chaque organe 16 consomme de l'énergie produite par le dispositif d'alimentation 14.

Dans l'exemple non revendiqué où l'installation 10 est une maison, les organes 16_1 et 16_2 sont, par exemple, des électroménagers. Notamment, le premier organe 16_1 est un lave-vaisselle alors que le deuxième organe 16_2 est un réfrigérateur.

Dans le cas où l'installation 10 est un automate, les organes 16 sont, par exemple, un organe de fourniture d'un ticket, un organe de lecture d'une carte de paiement, un organe de lecture de billets insérés, un dispositif d'affichage ou un organe de transmission de données.

Pour la suite, le premier organe 16_1 est un organe d'insertion d'un code confidentiel.

Le deuxième organe 16_2 est un dispositif d'affichage. Selon un mode de réalisation particulier, le dispositif est un écran.

Le deuxième organe 16_2 est propre à fonctionner selon plusieurs modes de fonctionnement.

Dans un premier mode de fonctionnement, le deuxième organe 16_2 affiche uniquement des informations permettant l'interaction de l'utilisateur avec les autres organes 16 de l'installation 10.

Dans un deuxième mode de fonctionnement, le deuxième organe 16_2 affiche à la fois les informations permettant l'interaction de l'utilisateur avec les autres organes 16 de l'installation 10 mais également des informations pouvant intéresser l'utilisateur. Parmi les informations pouvant intéresser l'utilisateur, l'attention de l'utilisateur est portée sur des événements culturels ayant lieu à proximité de l'installation 10 ou sur des informations relatives à l'entreprise gérant l'installation 10.

Le deuxième organe 16_2 consomme plus d'énergie dans le deuxième mode de fonctionnement que dans le premier mode de fonctionnement.

De manière généralisée, selon un mode de réalisation, chaque mode de fonctionnement entraîne une consommation d'énergie différente.

Le système de gestion 12 comporte une antenne 22 et une unité de détermination 24.

L'antenne 22 est propre à communiquer avec l'extérieur.

Par exemple, l'antenne 22 permet au système de gestion 12 d'accéder à des informations contenues dans un serveur, par exemple par une liaison radio.

L'unité de détermination 24 est propre à déterminer l'énergie disponible en provenance du dispositif d'alimentation 14.

L'unité de détermination 24 est également propre à déterminer l'énergie consommée par chacun des organes 16. En particulier, l'unité de détermination est propre à déterminer l'énergie consommée par le premier organe 16_1 et 'énergie consommée par le deuxième organe 16_2.

Le fonctionnement de l'installation 10 et du système de gestion 12 est maintenant illustré en référence à la mise en œuvre d'un procédé de gestion du fonctionnement de l'installation 10.

Le procédé de gestion comporte une pluralité d'étapes : une première étape a) de choix, une deuxième étape b) de détermination de l'énergie disponible, une troisième étape c) de détermination de l'énergie consommée et une quatrième étape d) d'optimisation.

La première étape a) de choix est mise en œuvre par une interaction entre le système de gestion 12 et l'utilisateur du procédé.

L'utilisateur spécifie le nombre de paramètres à prendre en compte dans les étapes suivantes du procédé.

Selon un mode de réalisation préféré, le nombre de paramètres est inférieur ou égal à 7, de préférence inférieur ou égal à 5 et préférentiellement inférieur ou égal à 3.

Les paramètres choisis à l'étape a) de choix sont choisis parmi des paramètres pertinents.

Chaque paramètre permet de quantifier l'énergie disponible pour le dispositif d'alimentation 14.

En particulier, les paramètres permettent de déterminer l'apport en énergie du panneau solaire 18.

Les paramètres sont choisis dans un groupe constitué de paramètres représentatifs de la période temporelle et de paramètres représentatif du panneau solaire 18.

Un paramètre représentatif de la période temporelle est, par exemple, le mois de l'année ou la saison. En effet, la période de l'année détermine l'ensoleillement propre lié au soleil E10. Le soleil E10 illumine plus le panneau solaire 18 en été qu'en plein hiver.

Un paramètre représentatif des caractéristiques techniques du panneau solaire 18 est, à titre d'exemple, des caractéristiques géométriques de taille ou de positionnement du panneau solaire 18.

Dans des modes de réalisation plus élaborés, des paramètres liés à l'environnement sont également pris en compte.

Selon un exemple, il est considéré comme paramètres, les paramètres suivants : l'irradiation annuelle, la température, les coordonnées géographiques de l'installation, le fuseau horaire, l'inclinaison du panneau solaire 18, l'orientation du panneau solaire 18, l'efficacité du panneau solaire 18 et le rendement de l'unité de stockage 20.

Dans un cas particulier, c'est la personne qui va régler le système de gestion 12 lors de l'installation du système de gestion sur l'installation 10 qui met en œuvre l'étape a). De manière générale, dans ce contexte, le terme « installation » désigne la phase précédent la mise en service sans indication de limites temporelles.

Avantageusement, dans un tel cas, la première étape a) est seulement mise en œuvre lors de la mise en route du système de gestion 12. Dans un tel cas, le nombre de paramètre est prédéterminé.

A l'issue de l'étape a) de choix, le nombre de paramètres à prendre en compte ainsi que les paramètres désirés sont connus et sont communiqués à l'unité de détermination 24.

Lors de la deuxième étape b) de détermination, il est déterminé l'énergie disponible en provenance du dispositif d'alimentation 14 en prenant en compte les paramètres sélectionnés à l'étape a) de choix.

Dans le mode de réalisation proposé, l'étape b) de détermination d'énergie disponible est mise en œuvre par le système de gestion 12 lui-même via l'unité de détermination 24.

L'étape de détermination b) d'énergie comporte plusieurs sous-étapes.

Lors d'une première sous-étape b1), il est fourni une image de l'environnement E. Dans le cas particulier de la figure 1, l'environnement E comprend trois éléments, à savoir le soleil E10, l'arbre E12 et le gratte-ciel E14.

Pour cela, il est réalisé une prise de vue à 360° pour l'installation 10. La prise de vue est, par exemple, obtenue à l'aide d'un capteur d'images.

En variante, l'image est fournie et obtenue à l'aide de l'antenne 22 sur un serveur distant.

A l'issue de la première sous-étape b1), il est obtenu une image de l'environnement E.

Lors d'une deuxième sous-étape b2), l'image obtenue lors de la première sous-étape b1) est traitée pour déterminer l'élévation de chaque obstacle par rapport au panneau solaire 18.

Par exemple, l'arbre E12 constitue un obstacle présentant une élévation plus faible que le gratte-ciel E14. Il en résulte que l'arbre E12 est moins gênant que le gratte-ciel E14 pour l'accès à la lumière du soleil E10.

L'ensemble de la carte regroupant l'élévation de chaque obstacle par rapport au panneau solaire 18 est usuellement appelé un masque d'élévation.

A l'issue de la deuxième sous-étape b2), il est ainsi obtenu un masque d'élévation pour l'environnement E.

La deuxième étape b) de détermination comporte une troisième sous-étape b3) de calcul de l'énergie produite à partir du masque d'élévation et d'autres paramètres sélectionnés par l'utilisateur à la première étape b).

En variante, l'énergie produite est fournie de manière extérieure au système de gestion 12. Dans une telle variante, l'antenne 22 communique avec un serveur puis fournit les données recueillies à l'unité de détermination 24.

La deuxième étape b) de détermination comprend aussi une quatrième sous-étape b4) de détermination de l'énergie stockée par le dispositif d'alimentation 14.

La deuxième étape b) de détermination comporte enfin une cinquième sous-étape de calcul de l'énergie disponible en provenance du dispositif d'alimentation 14. Pour cela, il est effectué la somme de l'énergie produite par le dispositif d'alimentation 14 et de l'énergie stockée par le dispositif d'alimentation 14.

Selon une autre variante, l'étape de détermination b) d'énergie disponible comporte uniquement la troisième sous-étape b3), le masque d'élévation étant obtenu grâce à l'antenne 22 à partir de données disponibles en ligne.

A l'issue de la deuxième étape b2) de fourniture de l'énergie produite, l'énergie produite disponible en provenance du dispositif d'alimentation 14 et donc disponible pour l'installation 10 est connue.

Lors de la troisième étape c), il est déterminé l'énergie consommée par chacun des organes 16_1 et 16_2 à l'aide de l'unité de détermination 24.

Par exemple, dans le cas du premier organe 16_1, la détermination de l'énergie consommée est calculée à partir de l'énergie impliquée dans une opération et du nombre d'opérations ayant lieu en moyenne sur l'installation 10.

Alternativement, la valeur de l'énergie consommée est fournie par un serveur distant.

De manière optionnelle, il est fourni la consommation des organes 16 pour chacun des modes de fonctionnement de l'organe 16. A titre d'exemple, la consommation en énergie du deuxième organe 16_2 est fournie à la fois dans le premier mode de fonctionnement et dans le deuxième mode de fonctionnement.

A l'issue de la troisième étape c) de détermination de la consommation d'énergie, la consommation de chacun des organes 16 est connue du système de gestion 12.

Lors de la quatrième étape d) d'optimisation, le fonctionnement de l'installation 10 est ajusté pour qu'un critère C prédéterminé soit rempli.

En variante, au lieu d'ajuster le fonctionnement de l'installation 10, des informations sont envoyées à l'exploitant, notamment pour anticiper les opérations de maintenance. Par exemple, une information indique le délai d'intervention pour une recharge de batterie de l'organe de stockage 20.

Selon une autre variante, des informations sont envoyées à l'usager. Par exemple, une information indique l'état de l'installation 10.

Par fonctionnement, dans le cadre de cette invention, il est entendu le nombre d'organes 16 qui sont fonctionnels ainsi que leurs modes de fonctionnement.

Dans le cas décrit, il y a six modes de fonctionnement pour l'installation 10 illustrée à la figure 1:
1. le premier organe 16_1 et le deuxième organe 16_2 ne sont pas opérationnels (la consommation en énergie est alors nulle),
2. le premier organe 16_1 est fonctionnel et le deuxième organe 16_2 n'est pas fonctionnel,
3. le premier organe 16_1 est fonctionnel et le deuxième organe 16_2 fonctionne selon le premier mode de fonctionnement,
4. le premier organe 16_1 est fonctionnel et le deuxième organe 16_2 fonctionne selon le deuxième mode de fonctionnement,
5. le premier organe 16_1 est non fonctionnel et le deuxième organe 16_2 fonctionne selon le premier mode de fonctionnement, et
6. le premier organe 16_1 est non fonctionnel et le deuxième organe 16_2 fonctionne selon le deuxième mode de fonctionnement.

Le critère prédéterminé C impose que le bilan énergétique de l'installation 10 soit supérieur ou égal à 0 pendant un temps donné de fonctionnement de l'installation 10.

Le bilan énergétique de l'installation 10 est défini de manière simple comme étant la différence entre l'énergie disponible en provenance du dispositif d'alimentation 14 et l'énergie consommée par les différents organes 16. L'énergie disponible en provenance du dispositif d'alimentation 14 est la somme de l'énergie produite par le dispositif d'alimentation 14 et l'énergie stockée dans le dispositif d'alimentation 14.

Le temps donné correspond généralement à un temps d'utilisation de l'installation 10. Par exemple, le temps donné est de 8 heures.

Selon une autre représentation, le temps donné est exprimé en termes d'opérations.

Avantageusement, le critère C est plus complexe et suppose que d'autres conditions soient vérifiées. A titre d'exemple, il est imposé qu'un organe 16 particulier fonctionne pour assurer que l'installation 10 soit utile à l'utilisateur.

Selon un autre exemple, le respect du critère C impose que l'évolution du bilan énergétique de l'installation 10 soit conforme à un modèle prédictif déterminé grâce aux informations issues des étapes a, b et c.

Le procédé permet donc d'estimer l'influence de l'environnement E sur la production d'énergie de l'installation 10. Selon l'exemple illustré, il est utilisé des masques représentant l'élévation des obstacles environnants pour déterminer une telle influence.

Le procédé permet également de prédire l'autonomie et les niveaux d'autonomie qui est une indication importante pour l'exploitation efficace de la machine sur le terrain. Cela est notamment obtenu par le calcul du nombre d'opérations maximum qu'une installation 10 peut réaliser quotidiennement pour garantir son autonomie énergétique.

Le procédé de gestion permet d'ajuster la consommation en énergie d'une installation pour garantir son autonomie. Il en résulte un service amélioré.

En variante, comme illustré schématiquement par la figure 2, le système de gestion 110 est externe à l'installation 10.

Pour cela, il est proposé un système de gestion 110 et un produit programme d'ordinateur 112 comme représenté à la figure 2. L'interaction du produit programme d'ordinateur 112 avec le système de gestion 110 permet de mettre en œuvre le procédé de gestion de l'installation 10.

Le système de gestion 110 est dans ce cas un ordinateur.

Plus généralement, le système de gestion 110 est un calculateur électronique propre à manipuler et/ou transformer des données représentées comme des quantités électroniques ou physiques dans des registres du système 110 et/ou des mémoires ou d'autres données similaires correspondant à des données physiques dans des mémoires, des registres ou d'autres dispositifs d'affichage, de transmission ou de mémorisation ;

Le système de gestion 110 comporte un processeur 114 comprenant une unité de traitement de données 116, des mémoires 118 et un lecteur 120 de support d'informations. Le système de gestion 110 comprend un clavier 122 et une unité d'affichage 124.

Le produit programme d'ordinateur 112 comporte un support lisible d'informations. Le support lisible d'informations est un support lisible par le système de gestion 110, usuellement par l'unité de traitement de données 116. Le support lisible d'informations est un médium adapté à mémoriser les instructions électroniques et capable d'être couplé à un bus d'un système informatique.

A titre d'exemple, le support lisible d'informations est une disquette ou disque souple de la dénomination anglaise de « floppy dise », un disque optique, un CD Rom, un disque magnéto-optique, une mémoire Rom, une mémoire Ram, une mémoire EPROM, une mémoire EEPROM, une carte magnétique ou une carte optique.

Sur le support lisible d'informations est mémorisé un programme d'ordinateur comportant des instructions de programmes.

Le programme d'ordinateur est chargeable sur l'unité de traitement de données 114 et est adapté pour entraîner la mise en œuvre du procédé de gestion de l'installation 10 lorsque le programme d'ordinateur est mis en œuvre par l'unité de traitement 116.

Chacun des procédés proposés peut être mis en œuvre à l'aide d'un ordinateur quelconque. De multiples systèmes peuvent être utilisés avec des programmes mettant en œuvre les procédés précédents et il est également envisageable d'utiliser des appareils dédiés à la mise en œuvre des procédés précédents, ceux-ci pouvant s'insérer dans les dispositifs propres à mesurer les données fournies. Notamment, selon un cas particulier, le système de gestion 12 comporte l'antenne 22, une unité de détermination et une unité de contrôle. Dans ce cas, l'unité de détermination est propre à déterminer le bilan énergétique et l'unité de contrôle est propre à gérer l'installation 10 en fonction du bilan énergétique.

De plus, les modes de réalisation proposés ne sont pas reliés à un langage de programmation particulier. Incidemment, cela implique que de multiples langages de programmations peuvent être utilisés pour mettre en œuvre un des procédés précédemment détaillés.

## Revendications

1. Procédé de gestion d'une installation (10) permettant d'ajuster la consommation en énergie de l'installation pour garantir son autonomie, l'installation étant un automate qui est un dispositif électromécanique multiservices à destination de l'usager de l'espace urbain et comprenant :
- un dispositif d'alimentation (14) comportant un système photovoltaïque comprenant au moins un panneau solaire (18) et une unité de stockage (20) propre à stocker l'énergie produite par le panneau solaire, et
- des organes (16) contribuant à la fourniture d'un ou de plusieurs services pour un utilisateur de l'installation et alimentés en énergie par le dispositif d'alimentation,
chaque organe ayant un mode non-fonctionnel dans lequel la consommation en énergie est nulle et au moins un mode de fonctionnement, chaque mode de fonctionnement entraînant une consommation d'énergie différente,
le procédé comportant :
- une étape de choix de paramètres, les paramètres permettant de déterminer l'apport en énergie du panneau solaire et étant choisis dans un groupe constitué de paramètres représentatifs de la période temporelle et de paramètres représentatifs du panneau solaire,
- une étape de détermination de l'énergie disponible en provenance du dispositif d'alimentation comportant une sous-étape de calcul de l'énergie produite à partir des paramètres choisis et d'un masque d'élévation pour l'environnement, le masque d'élévation étant un ensemble d'une carte regroupant l'élévation de chaque obstacle par rapport au panneau solaire,
- un étape de détermination de l'énergie consommée par les organes, la consommation pour chacun des modes de fonctionnement de chaque organe étant fournie, et
- une étape d'optimisation lors de laquelle le nombre d'organes qui sont fonctionnels, ainsi que leurs modes de fonctionnement, sont ajustés pour qu'un critère soit rempli, le critère étant rempli au moins si le bilan énergétique de l'installation est positif pendant un temps donné, le bilan énergétique étant la différence entre l'énergie disponible en provenance du dispositif d'alimentation et l'énergie consommée par les différents organes.

2. Procédé de gestion selon la revendication 1, dans lequel l'étape de détermination de l'énergie disponible en provenance du dispositif d'alimentation comporte une sous-étape de :
- fourniture de l'image de l'environnement (E) d'au moins une partie de l'installation,
- traitement de l'image fournie,
- calcul de l'énergie produite par le dispositif d'alimentation,
- détermination de l'énergie stockée par le dispositif d'alimentation, et
- calcul de l'énergie disponible en provenance du dispositif d'alimentation en effectuant la somme de l'énergie produite par le dispositif d'alimentation et de l'énergie stockée par le dispositif d'alimentation.

3. Procédé de gestion selon la revendication 1 ou 2, dans lequel à l'étape de détermination de l'énergie consommée, l'énergie consommée est exprimée en termes d'opérations.

4. Procédé de gestion selon l'une quelconque des revendications 1 à 3, dans lequel le nombre de paramètres pris en compte est inférieur ou égal à 7.

5. Procédé de gestion selon l'une quelconque des revendications 1 à 4, dans lequel les paramètres pris en compte comprennent la géométrie du dispositif d'alimentation, le rendement du dispositif d'alimentation et l'ensoleillement produit par le soleil.

6. Procédé de gestion selon l'une quelconque des revendications 1 à 5, dans lequel l'énergie disponible en provenance du dispositif d'alimentation est la somme d'une énergie produite par le dispositif d'alimentation et d'une énergie stockée dans le dispositif d'alimentation.

7. Procédé de gestion selon l'une quelconque des revendications 1 à 6, dans lequel le critère comprend la condition qu'un desdits organes doit fonctionner

8. Programme d'ordinateur comprenant des instructions de programme, le programme d'ordinateur étant chargeable sur une unité de traitement de données (116) et adapté pour entraîner la mise en œuvre d'un procédé selon l'une quelconque des revendications 1 à 7 lorsque le programme d'ordinateur est mis en œuvre sur l'unité de traitement des données.

9. Support de données comportant les instructions du programme d'ordinateur selon la revendication 8.

10. Système de gestion propre à gérer le fonctionnement d'une installation (10) et à ajuster la consommation en énergie de l'installation pour garantir son autonomie, l'installation étant un automate qui est un dispositif électromécanique multiservices à destination de l'usager de l'espace urbain et comprenant :
- un dispositif d'alimentation (14) comportant un système photovoltaïque comprenant au moins un panneau solaire (18) et une unité de stockage (20) propre à stocker l'énergie produite par le panneau solaire, et
- des organes (16) contribuant à la fourniture d'un ou de plusieurs services pour un utilisateur de l'installation alimentés en énergie par le dispositif d'alimentation,
chaque organe ayant un mode non-fonctionnel dans lequel la consommation en énergie est nulle et au moins un mode de fonctionnement, chaque mode de fonctionnement entraînant une consommation d'énergie différente,
le système de gestion étant propre à :
- choisir des paramètres, les paramètres permettant de déterminer l'apport en énergie du panneau solaire et étant choisis dans un groupe constitué de paramètres représentatifs de la période temporelle et de paramètres représentatifs du panneau solaire,
- déterminer l'énergie disponible en provenance du dispositif d'alimentation comportant une sous-étape de calcul de l'énergie produite à partir des paramètres choisis et d'un masque d'élévation pour l'environnement, le masque d'élévation étant un ensemble d'une carte regroupant l'élévation de chaque obstacle par rapport au panneau solaire,
- déterminer l'énergie consommée par les organes, la consommation pour chacun des modes de fonctionnement de chaque organe étant fournie,
- ajuster le nombre d'organes qui sont fonctionnels, ainsi que leurs modes de fonctionnement, pour qu'un critère soit rempli, le critère étant rempli au moins si le bilan énergétique de l'installation est positif pendant un temps donné, le bilan énergétique étant la différence entre l'énergie disponible en provenance du dispositif d'alimentation et l'énergie consommée par les différents organes.

## Patentansprüche

1. Verfahren zur Verwaltung einer Anlage (10), das es ermöglicht, den Energieverbrauch der Anlage einzustellen, um ihre Autonomie zu gewährleisten, wobei die Anlage ein Automat ist, der eine elektromechanische Vorrichtung mit mehreren Diensten für den Benutzer des städtischen Raums ist und umfasst:
- eine Versorgungsvorrichtung (14), die ein photovoltaisches System mit mindestens einem Solarpanel (18) und einer Speichereinheit (20) aufweist und geeignet ist, die vom Solarpanel erzeugte Energie zu speichern, und
- Elemente (16), die zur Beschaffung einer oder mehrerer Dienste für einen Benutzer der Anlage beitragen und von der Versorgungsvorrichtung mit Energie versorgt werden,
jedes Element einen betriebslosen Modus, in dem der Energieverbrauch Null ist, und mindestens einen Betriebsmodus aufweist, wobei jeder Betriebsmodus einen unterschiedlichen Energieverbrauch mit sich bringt,
wobei das Verfahren umfasst:
- einen Schritt der Auswahl von Parametern, wobei die Parameter die Bestimmung des Energieeintrags des Solarpanels ermöglichen und aus einer Gruppe ausgewählt werden, die aus Parametern, die für den Zeitraum repräsentativ sind, und Parametern, die für das Solarpanel repräsentativ sind, besteht,
- einen Schritt des Bestimmens der von der Versorgungsvorrichtung stammenden verfügbaren Energie, der einen Teilschritt des Berechnens der erzeugten Energie aus den ausgewählten Parametern und einer Höhenmaske für die Umgebung aufweist, wobei die Höhenmaske ein Satz einer Karte ist, die die Höhe jedes Hindernisses relativ zum Solarpanel zusammenfasst,
- einen Schritt des Bestimmens der von den Elementen verbrauchten Energie, wobei der Verbrauch für jeden der Betriebsmodi jedes Elementes geliefert wird, und
- einen Optimierungsschritt, in dem die Anzahl der Elemente, die funktionstüchtig sind, sowie deren Betriebsmodi derart eingestellt werden, dass ein Kriterium erfüllt wird, wobei das Kriterium zumindest dann erfüllt ist, wenn die Energiebilanz der Anlage für einen gegebenen Zeitraum positiv ist, wobei die Energiebilanz die Differenz zwischen der von der Versorgungsvorrichtung stammenden verfügbaren Energie und der von den verschiedenen Elementen verbrauchten Energie ist.

2. Verwaltungsverfahren nach Anspruch 1, wobei der Schritt des Bestimmens der von der Versorgungsvorrichtung stammenden verfügbaren Energie einen Teilschritt aufweist des:
- Beschaffens des Bildes der Umgebung (E) von mindestens einem Teil der Anlage,
- Verarbeitens des beschafften Bildes,
- Berechnens der vom Versorgungsvorrichtung erzeugten Energie,
- Bestimmens der von der Versorgungsvorrichtung gespeicherten Energie, und
- Berechnens der von der Versorgungsvorrichtung stammenden verfügbaren Energie durch Summierung der von der Versorgungsvorrichtung erzeugten Energie und der von der Versorgungsvorrichtung gespeicherten Energie.

3. Verwaltungsverfahren nach Anspruch 1 oder 2, bei dem im Schritt des Bestimmens der verbrauchten Energie die verbrauchte Energie in Hinblick auf Vorgänge ausgedrückt wird.

4. Verwaltungsverfahren nach einem beliebigen der Ansprüche 1 bis 3, bei dem die Anzahl der berücksichtigten Parameter kleiner oder gleich 7 ist.

5. Verwaltungsverfahren nach einem beliebigen der Ansprüche 1 bis 4, bei dem die zu berücksichtigten Parameter die Geometrie der Versorgungsvorrichtung, den Wirkungsgrad der Versorgungsvorrichtung und die von der Sonne erzeugte Sonnenstrahlung umfassen.

6. Verwaltungsverfahren nach einem beliebigen der Ansprüche 1 bis 5, bei dem die von der Versorgungsvorrichtung stammende verfügbare Energie die Summe aus einer von der Versorgungsvorrichtung erzeugten Energie und einer in der Versorgungsvorrichtung gespeicherten Energie ist.

7. Verwaltungsverfahren nach einem beliebigen der Ansprüche 1 bis 6, bei dem das Kriterium die Bedingung umfasst, dass eines der genannten Elemente im Betrieb sein muss.

8. Computerprogramm, das Programmbefehle umfasst, wobei das Computerprogramm auf eine Datenverarbeitungseinheit (116) ladbar ist und geeignet ist, die Durchführung eines Verfahrens nach einem beliebigen der Ansprüche 1 bis 7 zu bewirken, wenn das Computerprogramm auf der Datenverarbeitungseinheit ausgeführt wird.

9. Datenträger, der die Befehle des Computerprogramms nach Anspruch 8 aufweist.

10. Verwaltungssystem, das geeignet ist, den Betrieb einer Anlage (10) zu verwalten und den Energieverbrauch der Anlage einzustellen, um ihre Autonomie zu gewährleisten, wobei die Anlage ein Automat ist, der eine elektromechanische Vorrichtung mit mehreren Diensten für den Benutzer des städtischen Raums ist und umfasst:
- eine Versorgungsvorrichtung (14), die ein photovoltaisches System mit mindestens einem Solarpanel (18) und einer Speichereinheit (20) aufweist und geeignet ist, die vom Solarpanel erzeugte Energie zu speichern, und
- Elemente (16), die zur Beschaffung einer oder mehrerer Dienste für einen Benutzer der Anlage beitragen, die von der Versorgungsvorrichtung mit Energie versorgt wird,
jedes Element einen betriebslosen Modus, in dem der Energieverbrauch Null ist, und mindestens einen Betriebsmodus aufweist, wobei jeder Betriebsmodus einen unterschiedlichen Energieverbrauch mit sich bringt,
das Verwaltungssystem geeignet ist:
- Parameter auszuwählen, wobei die Parameter die Bestimmung des Energieeintrags des Solarpanels ermöglichen und aus einer Gruppe ausgewählt werden, die aus Parametern, die für den Zeitraum repräsentativ sind, und Parametern, die für das Solarpanel repräsentativ sind, besteht,
- die von der Versorgungsvorrichtung stammende verfügbare Energie zu bestimmen und aufweisend einen Teilschritt des Berechnens der erzeugten Energie aus den ausgewählten Parametern und einer Höhenmaske für die Umgebung, wobei die Höhenmaske ein Satz einer Karte ist, die die Höhe jedes Hindernisses relativ zum Solarpanel zusammenstellt,
- die von den Elementen verbrauchte Energie zu bestimmen, wobei der Verbrauch für jeden der Betriebsmodi jedes Elementes geliefert wird,
- die Anzahl der Elemente, die funktionstüchtig sind, sowie deren Betriebsmodi derart einzustellen, dass ein Kriterium erfüllt wird, wobei das Kriterium zumindest dann erfüllt ist, wenn die Energiebilanz der Anlage für einen gegebenen Zeitraum positiv ist, wobei die Energiebilanz die Differenz zwischen der von der Versorgungsvorrichtung verfügbaren Energie und der von den verschiedenen Elementen verbrauchten Energie ist.

## Claims

1. A method for managing an installation (10) allowing to adjust the energy consumption of the installation to ensure its autonomy, the installation being an automaton which is a multiservice electromechanical device intended for users of urban areas and comprising:
- a power supply device (14) comprising a photovoltaic system comprising at least one solar panel (18) and a storage unit (20) able to store the energy produced by the solar panel, and
- members (16) contributing to providing one or more services for a user of the installation and supplied with energy by the power supply device,
each member having a nonoperational mode wherein the energy consumption is zero and at least an operating mode, each operating mode leading to a different energy consumption,
the method comprising:
- a parameters choosing step, the parameters making it possible to determine the energy contribution of the solar panel and being chosen from a group consisting of parameters representative of the time period and parameters representative of the solar panel,
- a determination step for determining the available energy coming from the power supply device comprising a sub-step for computing the produced energy from the chosen parameters and from an elevation mask for the environment, the elevation mask being a set of a map containing the elevation of each obstacle relative to the solar panel,
- a determination step for determining the energy consumed by the members, the consumption of the members for each of the operating modes of the member being provided, and
- an optimization step wherein the number of members that are operational, as well as their operating modes, are adjusted so that a predetermined criterion is met, the criterion being met at least if the energy balance of the installation is positive for a given length of time, the energy balance being the difference between the available energy coming from the power supply device and the energy consumed by the various members.

2. The management method according to claim 1, wherein the step for determining the available energy coming from the power supply device comprises a sub-step of:
- providing the image of the environment (E) of at least part of the installation,
- processing the provided image,
- computing the energy produced by the power supply device,
- determining the energy stored by the power supply device, and
- computing the available energy coming from the power supply device by obtaining the sum of the energy produced by the power supply device and the energy stored by the power supply device.

3. The management method according to claim 1 or 2, wherein in the step for determining the consumed energy, the consumed energy is expressed in terms of operations.

4. The management method according to any one of claims 1 to 3, wherein the number of parameters taken into account is less than or equal to 7.

5. The management method according to any one of claims 1 to 4, wherein the parameters taken into account comprise the geometry of the power supply device, the output of the power supply device and the sunshine produced by the sun.

6. The management method according to any one of claims 1 to 5, wherein the available energy coming from the power supply device is the sum of an energy produced by the power supply device and an energy stored in the power supply device.

7. The management method according to any one of claims 1 to 6, wherein the criterion comprises the condition that one of said members is in an operating mode.

8. A computer program comprising program instructions, the computer program being able to be loaded on a data processing unit (116) and suitable for driving the implementation of a method according to any one of claims 1 to 7 when the computer program is implemented on the data processing unit.

9. A data medium comprising the instructions for the computer program according to claim 8.

10. A management system (12) able to manage an installation (10) and to adjust the energy consumption of the installation to ensure its autonomy, the installation being an automaton which is a multiservice electromechanical device intended for users of urban areas and, comprising:
- a power supply device (14) comprising a photovoltaic system comprising at least one solar panel (18) and a storage unit (20) able to store the energy produced by the solar panel, and
- members (16) contributing to providing one or more services for a user of the installation and supplied with energy by the power supply device,
each member having a nonoperational mode wherein the energy consumption is zero and at least an operating mode, each operating mode leading to a different energy consumption,
the management system (12) being able to:
- choose parameters, the parameters making it possible to determine the energy contribution of the solar panel and being chosen from a group consisting of parameters representative of the time period and parameters representative of the solar panel,
- determine the available energy coming from the power supply device comprising a sub-step for computing the produced energy from the chosen parameters and from an elevation mask for the environment, the elevation mask being a set of map containing the elevation of each obstacle relative to the solar panel,
- determine the energy consumed by the members (16), the consumption of the members for each of the operating modes of the member being provided, and
- adjust the number of members that are operational, as well as their operating modes, so that a predetermined criterion is met, the criterion being met at least if the energy balance of the installation is positive for a given length of time, the energy balance being the difference between the available energy coming from the power supply device and the energy consumed by the various members.
